# EUROPÄISCHE PATENTANMELDUNG

(11) **EP 1 375 791 A2**
(43) Veröffentlichungstag der Anmeldung: **02.01.2004**
(21) Anmeldenummer: 03014005.7
(22) Anmeldetag: 21.06.2003
(51) Int. Cl.: E05B 65/12, E05B 47/00, B60R 5/04

(54) **Verriegelungseinrichtung für ein Kraftfahrzeug**

(30) Priorität: 27.06.2002 DE 10229675
(71) Anmelder: BOS GmbH & Co. KG, 73760 Ostfildern (DE)
(72) Erfinder: Laudenbach, Thomas, 72108 Rottenburg (DE); Kötter, Mathias, 73760 Ostfildern (DE)
(74) Vertreter: Patentanwälte , Ruff, Wilhelm, Beier, Dauster & Partner

(57) **Zusammenfassung**

Bei einem Ausführungsbeispiel der Erfindung wird eine Verriegelungseinrichtung mit einer Halteeinrichtung (11) für eine Abdeckung (12) eines Laderaums eines Kraftfahrzeugs geschaffen. Die Abdeckung (12) ist in einer Längsführung (15) bewegbar und kann dort formschlüssig durch einen bewegbaren Vorsprung (17) gehalten werden. Der Vorsprung (17) ist mittels Stellmitteln (23) bewegbar, beispielsweise um eine Drehachse (20) drehbar. Die Stellmittel (23) weisen einen elektromotorischen Antrieb (24) sowie ein Getriebe (26) auf, vorzugsweise ein nicht selbsthemmendes Getriebe.

## Beschreibung

### Anwendungsgebiet und Stand der Technik

Die Erfindung betrifft eine Verriegelungseinrichtung für ein Kraftfahrzeug gemäß dem Oberbegriff des Anspruchs 1. Darunter soll im Sinne der Anmeldung auch eine Entriegelungseinrichtung verstanden werden.

Derartige Verriegelungseinrichtungen sind beispielsweise bekannt als Türverriegelungen bei Kraftfahrzeugen mit einer Zentralverriegelung. Hier fährt ein Vorsprung durch Druckluft betätigt in eine Ausnehmung eines Halteabschnitts ein. Dies ist in der Regel das Einfahren eines Zapfens in eine Ausnehmung.

### Aufgabe und Lösung

Der Erfindung liegt die Aufgabe zugrunde, eine eingangs genannte Verriegelungseinrichtung zu schaffen, mit der das Lösen oder die Freigabe eines Halteabschnittes automatisch oder vereinfacht erfolgen kann.

Diese Aufgabe wird gelöst durch eine Verriegelungseinrichtung mit den Merkmalen des Anspruchs 1. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß greift ein Vorsprung an einen Halteabschnitt an, insbesondere erfolgt dies formschlüssig. Dabei werden der Vorsprung und der Halteabschnitt relativ zueinander bewegt, um die Verbindung oder den Formschluss zu lösen. Es sind Stellmittel vorgesehen, die den Vorsprung und den Halteabschnitt relativ zueinander bewegen um den Formschluss zu lösen. Diese Stellmittel weisen einen elektromotorischen Antrieb und ein Getriebe zur Umsetzung der Antriebsbewegung auf. Somit kann, je nach Stellmittel, elektrisch und quasi ferngesteuert oder automatisiert die Abdeckung freigegeben werden oder gelöst werden.

Der Vorteil eines elektromotorischen Antriebs im Vergleich zu für ähnliche Aufgaben bekannten Hub- oder Stellmagneten liegt darin, dass bei Hubmagneten größere Stellwege nur schwer erreichbar sind. Des weiteren sind Magnete relativ schwer.

An dem Halteabschnitt kann eine Ausnehmung ausgebildet sein, in welche der Vorsprung einfährt oder daran angreift. Die Ausnehmung kann ein einseitig offener Ausschnitt sein, alternativ eine Vertiefung oder ein Durchbruch nach Art einer Öffnung. Der Vorsprung kann beispielsweise nach Art eines Zapfens in eine Öffnung einfahren.

Das Getriebe des Antriebs kann vorteilhaft als nicht selbsthemmendes Getriebe ausgebildet sein. Dadurch ist eine Art selbsttätige Rückstellung möglich. So können besonders vorteilhaft der Halteabschnitt bzw. der Vorsprung freigegeben werden und anschließend die Stellmittel wieder zurück in eine Ausgangslage gebracht werden. Das Getriebe blockiert diese Bewegung dann nicht.

Eine Ausführungsmöglichkeit des Getriebes kann nicht achsparallele Zahnräder aufweisen. Es kann ein Schneckengetriebe sein, vorteilhaft ein mehrfaches Schneckengetriebe. Auch dieses kann ein nicht selbsthemmendes Getriebe sein.

Als weitere Möglichkeit kommt ein Getriebe mit einer Zahnstange in Betracht. Dabei ist die Zahnstange vorteilhaft mit dem Vorsprung oder dem Halteabschnitt verbunden bzw. bewegt diese.

Der Vorsprung oder der Halteabschnitt können sowohl eine formschlüssige Halteposition als auch eine Freigabeposition zur Freigabe aufweisen. Dies gilt insbesondere für den Vorsprung. Ein Formschluss besteht vorteilhaft in mindestens einer Richtung. In der anderen Richtung kann der Halteabschnitt eventuell frei von dem Vorsprung weg bewegt werden. Alternativ kann ein Formschluss in beiden Richtungen bestehen.

Es kann eine Bewegungsfreiheit des Vorsprungs und des Halteabschnitts relativ zueinander in zwei entgegengesetzten Richtungen vorgesehen sein. In einer Richtung kann die Bewegung, vorzugsweise zum Lösen des Formschlusses, elektromotorisch mit Hilfe der Stellmittel erfolgen. Vorteilhaft zum Rückstellen des Vorsprunges oder zum Herstellen des Formschlusses kann eine Bewegung in die andere Richtung durch eine mechanische Rückstellung, insbesondere mit einer Feder oder dergleichen, erfolgen.

Vorteilhaft ist vorgesehen, dass der Vorsprung relativ zu dem Halteabschnitt bewegt wird, sich also der Vorsprung selber bewegt. Wenn der Vorsprung bewegbar ausgebildet ist, kann er einerseits als linear betätigte Stange oder dergleichen ausgebildet sein, die nach Art eines Zapfens in eine Öffnung an dem Halteabschnitt einfährt.

Alternativ ist es möglich, den Vorsprung um eine Drehachse drehbar auszubilden. Hier ist es möglich, den Vorsprung an sich in einer Richtung ausweichend auszubilden, um dadurch den Halteabschnitt festzuhalten. Dies bedeutet, dass durch Drücken des Halteabschnitts gegen den Vorsprung, was durch eine seitliche Abschrägung vereinfacht werden kann, der Vorsprung ausweicht und hinter sich den Halteabschnitt festhält. So kann praktisch der Halteabschnitt hinter dem Vorsprung festgehakt werden. Ebenso ist es möglich, dass der Vorsprung eine Führung, beispielsweise eine Längsführung für den Halteabschnitt, freigibt.

Bei einer einfachen Ausgestaltung der Erfindung ist es möglich, die Stellmittel lagegesichert und den Vorsprung bewegbar auszugestalten. Alternativ dazu können die Stellmittel zusammen mit dem Vorsprung bewegbar ausgebildet sein. Beispielsweise kann sich ein elektromotorischer Antrieb mit dem Getriebe um ein Zahnrad oder dergleichen, welches positionsfest angeordnet ist, drehen. Dabei kann ein Vorsprung mit dem Antrieb verbunden sein und sich so drehen.

Um die Auslösekraft der Stellmittel auf den Halteabschnitt oder den Vorsprung zu übertragen, kann ein Betätigungsstab vorgesehen sein. Dieser ist bewegbar und steht beispielsweise derart mit dem Vorsprung in Wirkverbindung, dass sich der Vorsprung durch eine Längsverbindung des Betätigungsstabs dreht oder ausweicht.

Die Stellmittel können mit einer Auslöseeinrichtung verbunden sein, beispielsweise mit einem Sensor oder einem Schalter. Die Auslöseeinrichtung kann beispielsweise an einem Verschluß, einer Tür oder einer Heckklappe des Laderaums angeordnet sein und die Stellmittel auslösen. Dies ermöglicht es, beispielsweise bei einem Öffnen der Heckklappe ein automatisches Lösen und Zurückziehen des Vorsprungs und somit einer Laderaumabdeckung oder dergleichen zu bewirken.

Besonders vorteilhaft wird eine solche Verriegelungseinrichtung für eine Abdeckung eines Laderaums eines Kraftfahrzeuges eingesetzt. Die Abdeckung kann einen Halteabschnitt aufweisen und durch den Vorsprung formschlüssig in einer Halteposition gehalten werden.

Es ist möglich, die Abdeckung frei bewegbar zu gestalten. Vorteilhaft verläuft sie mit einem Halteabschnitt in einer Führung. Die Führung kann insbesondere an beiden Seiten des Laderaums vorgesehen sein. Dazu kann die Abdeckung Halteenden oder eine zuvor erwähnte Abschlussstange aufweisen, welche in der Führung geführt sind. Der Vorsprung greift vorteilhaft in die Führung ein. Hier ist es besonders vorteilhaft, wenn der Vorsprung bewegbar ist. Zur Herstellung des Formschlusses kann er dazu in die Führung eingreifen. Zur Freigabe der Abdeckung kann der Vorsprung aus der Führung heraus bewegt werden.

In der Halteposition kann sich die Abdeckung vorteilhaft unter einer Kraftbeaufschlagung, beispielsweise einer Spannung, befinden. Wird nun die Halterung gelöst bzw. der Formschluss zwischen Abdeckung und Vorsprung gelöst, kann sich die Abdeckung automatisch bewegen. Eine solche automatische Bewegung erfolgt vorteilhaft entweder in eine andere Lage oder ist ein im wesentlichen Zurückziehen der Abdeckung zum Verstauen.

Zusätzlich zu dem Formschluss zwischen Abdeckung und Vorsprung in eine Richtung kann vorgesehen sein, dass der Vorsprung die Abdeckung in zwei Richtungen entlang der Führung formschlüssig haltert. So kann eine Bewegung der Abdeckung insgesamt durch den Vorsprung vermieden werden.

Eine Führung kann insbesondere an der hintersten Dachträgersäule des Kraftfahrzeuges vorgesehen sein. Dies ermöglicht es, die Abdeckung beim Öffnen einer Heckklappe mit nach oben zu bewegen, um so gleichzeitig den Laderaum freizugeben. Dadurch wird jedoch noch nicht die Abdeckung so gelöst, dass sie sich vollständig zusammenziehen kann.

Die Abdeckung selber kann als Flächengebilde ausgebildet sein und eine im wesentlichen starre Stange am Ende aufweisen. Diese starre Stange kann im wesentlichen die gesamte Breite des Laderaums überdecken, ebenso wie die Abdeckung selber. An der starren Stange sind beispielsweise die Halteenden, die dem Halteabschnitt entsprechen, angeordnet.

Diese und weitere Merkmale gegen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischenüberschriften beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. In den Zeichnungen zeigen:
- Fig. 1: eine Darstellung einer Abdeckung in einer Führung, welche von einem über Stellmittel bewegbaren Vorsprung gehalten wird,
- Fig. 2: eine Abwandlung der Darstellung aus Fig. 1 mit einem längsbeweglichen Vorsprung,
- Fig. 3: eine weitere Darstellung einer Führung mit einem über Stellmittel bewegbaren Vorsprung, wobei der Vorsprung längsbeweglich ist,
- Fig. 4: eine Abwandlung der Einrichtung aus Fig. 3 mit anderem Aufbau der Stellmittel sowie ein an einem Zahnrad zweifach schwenkbar angeordneten Vorsprung und
- Fig. 5: eine Schrägansicht eines Laderaums eines PKW mit einer Abdeckung, die in einer Führung bewegbar ist und von einem Vorsprung samt Stellmitteln festgehalten und freigegeben werden kann.

### Detaillierte Beschreibung der Ausführungsbeispiele

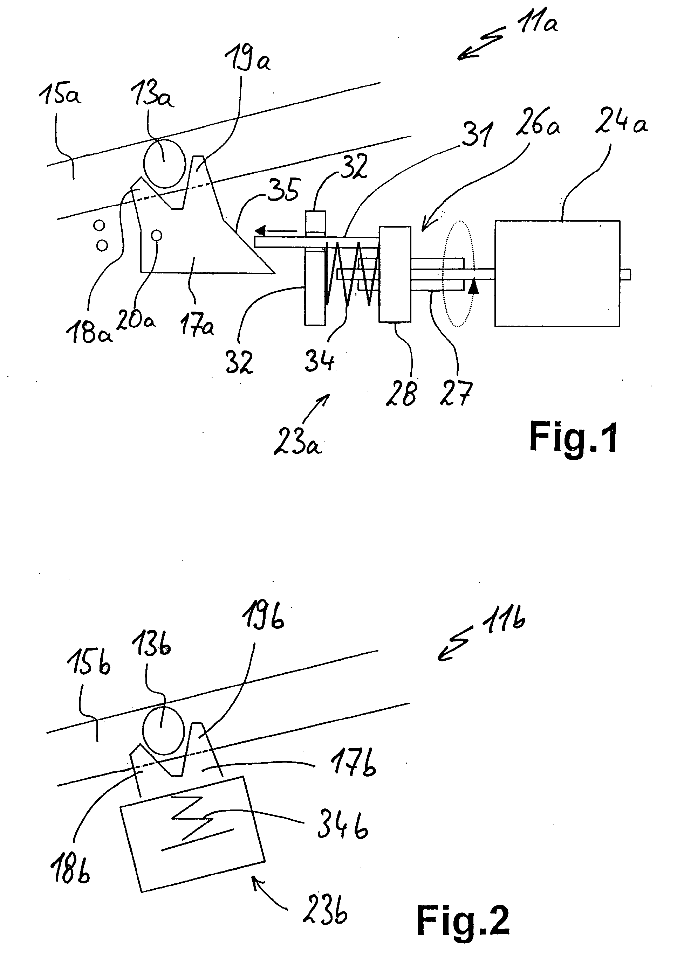

Aus Fig. 1, die ebenso wie die weiteren Figuren schematisch zu verstehen ist und das Erfindungsprinzip wiedergeben soll, geht eine Halteeinrichtung 11a für eine Endstange 13a einer nicht dargestellten Abdeckung 12 hervor. Die Halteeinrichtung 11a besteht im wesentlichen aus einer erfindungsgemässen Verriegelungseinrichtung.

Die Endstange 13a ist in einer Längsführung 15a bewegbar, insbesondere hin- und her verschiebbar. Sie kann in der in Fig. 1 dargestellten Halteposition durch den Vorsprung 17a festgehalten werden und an einer Bewegung gehindert werden. Dazu weist der Vorsprung 17a eine linke Zacke 18a sowie eine rechte Zacke 19a auf. Zwischen diesen beiden Zacken 18 und 19 ist die Endstange 13a gehaltert und an einer Bewegung in beiden Richtungen entlang der Längsführung 15 gehindert. Der Vorsprung 17a ist um die Drehachse 20a drehbar.

Wie zu erkennen ist, ist zumindest durch die leichte Abschrägung der linken Zacke 18a nach links oben der Vorsprung 17a bei einer Bewegung der Endstange 13a von links dagegen nachgebend bewegbar ausgebildet. So kann durch manuelle Bewegung die Endstange 13a an dem Vorsprung 17a gehaltert werden bzw. zwischen die Zacken 18a und 19a eingebracht werden.

Des weiteren ist aus Fig. 1 zu erkennen, dass Stellmittel 23a zur Bewegung des Vorsprungs 17a vorgesehen sind. Diese weisen einen elektrischen Antriebsmotor 24a sowie ein Getriebe 26a auf. Das Getriebe 26a besteht aus einem Schneckenrad 27a auf der Motorachse. Dieses greift in ein Gegenrad bzw. Gegenstück 28a, welches eine translatorische Bewegung durchführt. Das Gegenstück 28a ist mit einem Auslösestab 31a verbunden, der in einer Führung 32a geführt ist.

Der Auslösestab 31a ist durch die Längsbewegung des Gegenstücks 28a gegen die Gleitkante 35a des Vorsprungs 17a bewegbar. So kann er den Vorsprung 17a im Uhrzeigersinn schwenken zur Freigabe der Endstange 13a.

Des weiteren ist eine Rückstellfeder 34a für das Gegenstück 28 bzw. den Auslösestab 31a vorgesehen. Hier ist die Rückstellfeder 34a zwischen der Führung 32a und dem Gegenstück 38a angeordnet. Dreht sich der Antriebsmotor 24a nicht mehr oder übt er keine Kraft mehr aus, so drückt die Rückstellfeder 34 das Gegenstück 28a wieder nach rechts. Da das Getriebe 26a nicht selbsthemmend ausgebildet ist, drehen sich das Schneckenrad 27 sowie die Antriebswelle des Antriebsmotors 24a und das Gegenstück 28a kann nach rechts ausweichen. Dadurch bewegt sich der Auslösestab 31 ebenfalls nach rechts und der Vorsprung 17a ist wieder frei. Es ist auch möglich, den Vorsprung 17a durch eine weitere Feder in die in Fig. 1 dargestellte Stellung zurückzustellen.

Aus der Darstellung in Fig. 1 wird für den Fachmann klar, wie in einer abgewandelten Form nur aus den Stellmitteln 23a mit dem Auslösestab als erfindungsgemäßem Vorsprung und der Führung 32 als Halteabschnitt mit einer Ausnehmung, durch welche der Auslösestab fährt, eine erfindungsgemäße Verriegelungseinrichtung in ihrer einfachsten Form aufgebaut sein könnte. Dabei wäre es dann möglich, den Auslösestab 31 nach rechts aus der Führung 32 herauszufahren, wodurch die Führung 32 freigegeben würde. Somit würde eine Entriegelung stattfinden, die Führung 32 wäre frei bewegbar.

Alternativ könnte das Getriebe 26a ersetzt werden durch ein Zahnrad als Abtrieb an dem Elektromotor 24a und eine mit diesem Zahnrad zusammenwirkende Zahnstange. Diese Zahnstange treibt einen Vorsprung ähnlich dem Vorsprung 17a aus Fig.1 an. Ebenso ist eine Feder vorgesehen zur Rückstellung.

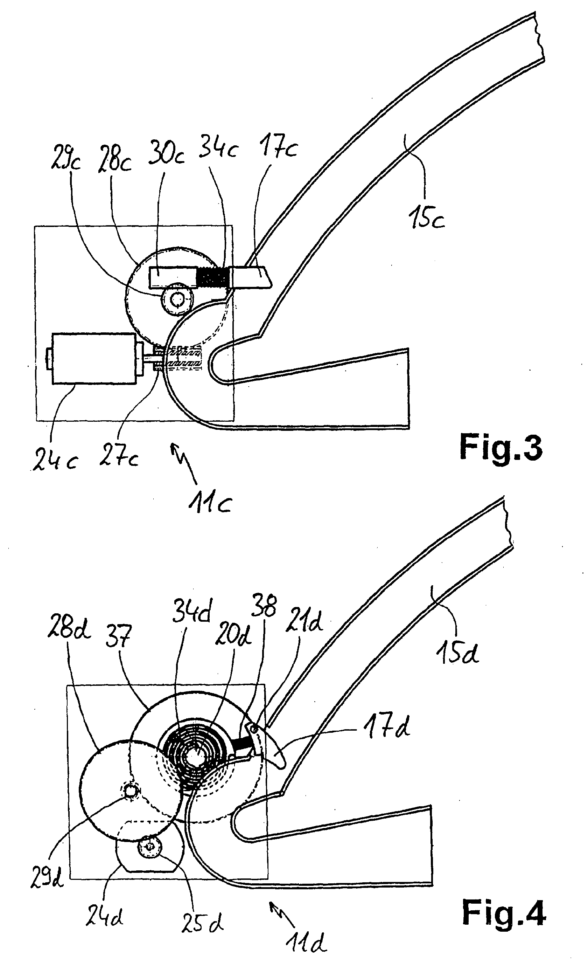

Aus der vereinfachten Darstellung in Fig. 2 geht hervor, wie ein ähnlich ausgebildeter Vorsprung 17b mit einer linken Zacke 18b und einer rechten Zacke 19b nicht wie in Fig. 1 um eine Drehachse 20a drehbar ausgebildet ist, sondern längsverschiebbar. Diese Längsverschiebbarkeit ist durch die Stellmittel 23b gegeben. Bei der Darstellung in Fig. 2 wurde auf eine genauere Darstellung der Stellmittel verzichtet, diese ist für den Fachmann in einer Abwandlung der Stellmittel 23a aus Fig. 1 oder der Stellmittel 23c aus Fig. 3 oder 23d aus Fig. 4 leicht zu realisieren. Lediglich die Rückstellfeder 34b ist dargestellt. Diese verdeutlicht, dass beim Einführen der Endstange 13b in der Längsführung 15b beispielsweise von links über die abgeschrägte linke Zacke 18b der Vorsprung 17b wieder zurückgedrückt wird. Dabei schließt er die Endstange 13b wieder zwischen den beiden Zacken 18b und 19b ein und sichert sie so.

In Fig. 3 ist anstelle einer geraden Längsführungen wie in den Fig. 1 und 2 eine gebogene bzw. geschwungene Führung 15c dargestellt. Innerhalb dieser kann in entsprechender Weise eine Endstange 13 verschoben bzw. bewegt werden.

Der Vorsprung 17c ist, gemäß dem Funktionsprinzip nach Fig. 2, translatorisch bewegbar. Insbesondere weist er eine nach rechts oben weisende Abschrägung auf zum selbsttätigen Einrasten einer Endstange 13 von oben in der Führung 15c kommend.

Die Stellmittel 23c sind derart ausgebildet, dass der Antriebsmotor 24c ein Schneckenrad 27c dreht. Das Schneckenrad 27c steht in Eingriff mit dem großen Gegenrad 28c, welches wiederum mit einem kleinen Zahnrad 29c verbunden ist. Das kleine Zahnrad 29c greift in die Zahnstange 30c, welche derart mit dem Vorsprung 17c verbunden ist, dass sie diesen bei einer Bewegung nach links oder rechts entsprechend mitzieht.

Hier ist eine Rückstellfeder 34c vorgesehen. Diese kann beispielsweise auch bei unbeweglicher Zahnstange 30c eine elastische Bewegung des Vorsprungs 17c nach links ermöglichen. Dies kann beispielsweise vorgesehen sein, um eine Endstange 13 hinter den Vorsprung 17c zu drücken und diesen wieder selbsttätig ausfahren lassen zur Halterung der Endstange 13c. Das Ein- und Ausfahren des Vorsprungs 17c mittels der Stellmittel 23c zur Freigabe der Endstange 13 könnte in diesem Fall jeweils durch die Stellmittel 13c bzw. den Antriebsmotor 24c erfolgen.

Wie aus Fig. 3 zu erkennen ist, weist das Getriebe 26c das Schneckenrad 27c, die zwei Zahnräder 28c und 29c sowie die Zahnstange 30c auf.

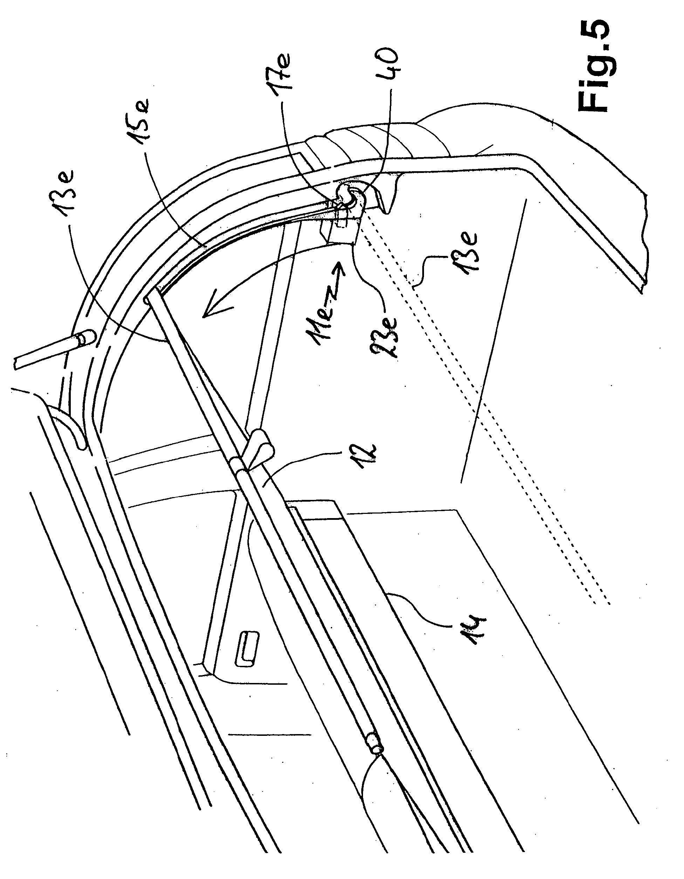

Die Führung 15c kann nach oben weitergehen, ähnlich der Führung 15e nach Fig. 5. Nach unten kann sie in dem gerade nach rechts weisenden Ende geöffnet sein zum Einbringen der Endstange 13 der Abdeckung 12.

Die Führung 15d in Fig. 4 ist identisch ausgebildet wie in Fig. 3. Die Stellmittel 23d dagegen weisen zum einen ausschließlich Zahnräder und keine Schneckenräder auf. Der Antriebsmotor 24b trägt ein Motorritzel 25d, welches an ein großes Gegenrad 28d antreibt. Das Gegenrad 28d ist mit einem kleinen Zahnrad 29b verbunden, welches wiederum das große Zahnrad 37d antreibt. Auf der rechten Seite ist der Vorsprung 17d an dem Zahnrad 37d befestigt. Dies erfolgt über eine zweite Drehachse 21d, an welcher der Vorsprung 17d drehbar gelagert ist.

Bei einer Bewegung einer Endstange 13d von oben kommend gegen den Vorsprung 17d kann sich dieser um die zweite Drehachse 21d drehen und, gegen den Widerstand der zweiten Feder 38, schwenken und die Führung für die Endstange freigeben. Hinter der Endstange 13 schnappt der Vorsprung 17d, herausgedrückt von der zweiten Feder, wieder automatisch heraus.

Zur Freigabe der Führung 15d in der Richtung nach schräg rechts oben wird über den Antriebsmotor 24d das große Zahnrad 37 entgegen dem Uhrzeigersinn um die Drehachse 20d gedreht. Dadurch verschwindet der Vorsprung 17d aus der Führung 15d und gibt diese frei. Die Drehbewegung des großen Zahnrads 37 kann eine Rückstellfeder 34d, hier ausgeführt als Spiralfeder, spannen. Nach Abschalten des Antriebsmotors 24d wird durch die Kraft der Rückstellfeder 34d das große Zahnrad 37 wieder gegen den Uhrzeigersinn gedreht. Dies erfolgt vorteilhaft gegen einen Anschlag, und zwar so weit, dass der Vorsprung 17d in der in Fig. 4 dargestellten Position ist.

Insgesamt ist zu den Fig. 1, 3 und 4 zu sagen, dass durch die Wahl der Übersetzungsverhältnisse der Getriebe 26a bis 26d die Stellkraft sowie die Stellgeschwindigkeit der Vorsprünge 17a bis 17d bestimmt wird. Vorteilhaft sind alle Getriebe nicht selbsthemmend, so dass sie sich von der Rückstellfeder 34 veranlasst selber bewegen lassen.

Aus der Ansicht eines Laderaums eines Kfz von hinten in Fig. 5 wird zum einen der Aufbau der Abdeckung 12 mit der Endstange 13e deutlich. Dabei kann die Abdeckung 12 in den Rollkasten 14 gezogen werden, beispielsweise durch eine Rückzugfeder. Auf diese Weise ist die Abdeckung 12 sowie vor allem die Endstange 13e ständig kraftbelastet in Richtung auf den Rollkasten 14 zu.

Die Endstange 13e verläuft in der Längsführung 15e, deren Verlauf in etwa dem Verlauf der Hecksäule entspricht. Im unteren Bereich der Längsführung 15e ist eine Halteeinrichtung 11e vorgesehen. Diese weist einen Vorsprung 17e auf, der in die Längsführung 15e reicht und die Endstange 13e in der gestrichelt dargestellten Position an einer Bewegung nach oben in der Längsführung 15e hindert. Der Vorsprung 17e ist über Stellmittel 23e bewegbar, insbesondere aus der Längsführung 15e herausziehbar.

Über einen Halteabsatz 40, der noch zu der Längsführung 15e gehört, wird die Endstange 13e in der gestrichelt dargestellten Position nach unten abgestützt. Wird sie nach oben und hinten gezogen, so kann der Halteabsatz 40 überwunden werden und die Endstange 13e nach schräg unten und vorne aus der Längsführung 15e herausgenommen und beispielsweise vollständig in den Rollkasten 14 versenkt werden.

Nach Zurückbewegen des Vorsprungs 17e bewegt sich die Endstange 13e aus der gestrichelt dargestellten Position in die durchgezogen dargestellte Position. Diese Bewegung erfolgt durch die Spannung, unter der die Abdeckung 12 steht. Bei einer Bewegung entlang der Längsführung 15e nach vorne und nach oben kommt die Endstange 13e dabei näher an den Rollkasten 14. So kann die unter Spannung stehende Abdeckung durch eben diese Spannung in der Führung 15e bewegt werden.

Bei einer Anordnung nach Fig. 5 können nicht dargestellte Sensormittel vorgesehen sein, die ein Öffnen der Heckklappe registrieren. Davon abhängig wird ein Signal an die Stellmittel 23e geschickt, welches den Vorsprung 17e zurückzieht und eine Bewegung der Abdeckung 12 bewirkt. Dieses kann beispielsweise den Sinn haben, dass beim Öffnen der Heckklappe die Abdeckung automatisch so bewegt wird, dass der Laderaum zumindest teilweise frei zugänglich ist. Anstelle einer Bewegung nach oben ist es auch vorstellbar, eine Längsführung direkt zu dem Rollkasten 14 hin vorzusehen. Dann kann bei Freigabe der Endstange 13 durch den Vorsprung 17 die Abdeckung 12 vollständig in den Rollkasten 14 selbsttätig eingezogen werden. Beim Schließen der Heckklappe ist dann manuell die Abdeckung wieder hinter den Vorsprung 17 zu arretieren, falls dies gewünscht ist.

## Patentansprüche

1. Verriegelungseinrichtung für ein Kraftfahrzeug, wobei ein Vorsprung (17) an einen Halteabschnitt (13) angreift und der Vorsprung und der Halteabschnitt relativ zueinander bewegbar sind, **dadurch gekennzeichnet, dass** zur Durchführung der Bewegung Stellmittel (23) vorgesehen sind und die Stellmittel einen elektromotorischen Antrieb (24) mit einem Getriebe (26) aufweisen.

2. Verriegelungseinrichtung nach Anspruch 1, **dadurch gekennzeichnet, dass** an dem Halteabschnitt (13) eine Ausnehmung ausgebildet ist.

3. Verriegelungseinrichtung nach Anspruch 1 oder 2, **dadurch gekennzeichnet, dass** das Getriebe (26) ohne Selbsthemmung ausgebildet ist.

4. Verriegelungseinrichtung nach einem der vorhergehenden Ansprüche, **dadurch gekennzeichnet, dass** das Getriebe (26) Zahnräder (27, 28, 29) aufweist, die nicht achsparallel sind, wobei es vorzugsweise ein Schneckengetriebe (27, 28) ist.

5. Verriegelungseinrichtung nach einem der vorhergehenden Ansprüche, **dadurch gekennzeichnet, dass** der Vorsprung (17) eine Halteposition zur formschlüssigen Halterung des Halteabschnitts (13) und eine Freigabeposition zur Freigabe des Halteabschnitts aufweist, wobei vorzugsweise der Formschluss in mindestens einer Richtung besteht.

6. Verriegelungseinrichtung nach einem der vorhergehenden Ansprüche, **gekennzeichnet durch** eine Bewegungsfreiheit des Vorsprungs (17) relativ zu dem Halteabschnitt (13) in zwei entgegengesetzten Richtungen, wobei in einer Richtung, vorzugsweise zum Lösen des Formschlusses, die Bewegung elektromotorisch **durch** die Stellmittel (23) erfolgt und in der anderen Richtung, vorzugsweise zum Rückstellen oder Herstellen des Formschlusses, die Bewegung **durch** Federmittel (34) oder dergleichen erfolgt.

7. Verriegelungseinrichtung nach einem der vorhergehenden Ansprüche, **dadurch gekennzeichnet, dass** der Vorsprung (17) bewegbar gelagert ist, insbesondere drehbar um eine Drehachse (20) wobei vorzugsweise der Vorsprung (17) bei Bewegen des Halteabschnitts (13) ausweichend und dadurch eine Führung (15) freigebend ausgebildet ist.

8. Verriegelungseinrichtung nach einem der vorhergehenden Ansprüche, **dadurch gekennzeichnet, dass** die Stellmittel (23) zusammen mit dem Vorsprung (17) bewegbar sind.

9. Verriegelungseinrichtung nach einem der vorhergehenden Ansprüche, **dadurch gekennzeichnet, dass** die Stellmittel (23) einen Betätigungsstab (31) aufweisen, der bewegbar ist und derart mit dem Vorsprung (17) in Wirkverbindung steht, dass durch eine Längsbewegung des Betätigungsstabes der Vorsprung drehbar ist.

10. Verriegelungseinrichtung nach einem der vorhergehenden Ansprüche, **dadurch gekennzeichnet, dass** die Stellmittel (23) mit einer Auslöseeinrichtung verbunden sind, wobei vorzugsweise die Auslöseeinrichtung ein Sensor oder ein Schalter ist und insbesondere an einem Verschluss oder einer Heckklappe des Laderaums angeordnet ist.

11. Verriegelungseinrichtung nach einem der vorhergehenden Ansprüche für eine Abdeckung (12) eines Laderaums eines Kraftfahrzeugs, **dadurch gekennzeichnet, dass** die Abdeckung (12) einen Halteabschnitt (13) aufweist und durch den Vorsprung (17) formschlüssig in einer Halteposition gehalten wird.

12. Verriegelungseinrichtung nach Anspruch 11, **dadurch gekennzeichnet, dass** die Abdeckung (12) mit einem Halteabschnitt (13) in einer Führung (15) verläuft, und der Vorsprung (17) in die Führung eingreift, wobei insbesondere der Vorsprung bewegbar ist zur Herstellung des Formschlusses sowie zur Freigabe der Führung (15).

13. Verriegelungseinrichtung nach Anspruch 11 oder 12, **dadurch gekennzeichnet, dass** sich die Abdeckung (12) in einer Halteposition unter einer Kraftbeaufschlagung befindet, vorzugsweise einer Spannung, wobei sich insbesondere beim Lösen der Halteposition die Abdeckung automatisch bewegt in eine andere Lage oder sich im wesentlichen zurückzieht.

14. Verriegelungseinrichtung nach Anspruch 12 oder 13 **dadurch gekennzeichnet, dass** der Vorsprung (17) die Abdeckung (12) in beide Richtungen entlang der Führung (15) formschlüssig haltert und eine Bewegung verhindert.

15. Verriegelungseinrichtung nach einem der Ansprüche 12 bis 14, **dadurch gekennzeichnet, dass** die Führung (15) an einer seitlichen Begrenzung des Laderaums zumindest schräg nach oben verläuft, wobei sie insbesondere an der letzten Dachträgersäule des Kraftfahrzeuges in Richtung des Dachs verläuft.

16. Verriegelungseinrichtung nach einem der Ansprüche 12 bis 15, **dadurch gekennzeichnet, dass** die Abdeckung (12) ein Flächengebilde aufweist mit einer im wesentlichen starren Stange (13) am Ende, die im wesentlichen die gesamte Breite des Laderaums überdeckt, wobei insbesondere die Enden der Stange die Halteabschnitte (13) bilden und von dem Vorsprung (17) festgehalten sind.
